# FASCICULE DE BREVET EUROPEEN

(11) **EP 2 504 957 B1**
(45) Date de publication et mention de la délivrance du brevet: **04.05.2016**
(21) Numéro de dépôt: 10805262.2
(22) Date de dépôt: 24.11.2010
(51) Int. Cl.: H04L 12/28, H04L 29/06

(54) **ACCES A UN CONTENU REFERENCE PAR UN SERVEUR DE CONTENU**
ZUGRIFF AUF REFERENZIERUNGSINHALTEN MIT EINEM INHALTSSERVER
REFERENCED CONTENT ACCESS FROM A CONTENT SERVER

(30) Priorité: 26.11.2009 FR 0958408
(43) Date de publication de la demande: 03.10.2012
(73) Titulaire: Orange, 75015 Paris (FR)
(72) Inventeur: AGRO, Roberto, F-92340 Bourg la Reine (FR); BENDIABDALLAH, Halim, F-92430 Marnes La Coquette (FR)
(74) Mandataire: Millet, Sandrine
(86) Numéro de dépôt international: PCT/FR2010/052496
(87) Numéro de publication internationale: WO 2011/064497

(56) Documents cités:
- WO-A1-2008/054270
- WO-A1-2008/068963
- WO-A1-2009/003496

## Description

L'invention concerne le domaine des télécommunications et, plus particulièrement, un procédé d'accès à des contenus d'un réseau à partir d'un équipement n'accédant pas à ce réseau et dispositifs de mise en oeuvre d'un tel procédé.

Dans le domaine des réseaux domestiques, le protocole UPNP s'impose comme un standard pour le partage, la diffusion et le contrôle des contenus numériques: Aujourd'hui, différents équipements conformes au standard UPNP (Universal Plug and Play) se répandent dans les foyers, et en particulier dans le domaine du multimédia avec les Media Servers (nommés par exemple Twonkymedia, Windows Media Player 11, ...), les Media Renderers (STB, DMA audio, IP-Radio, ...), et les Media Players (consoles de jeux, des cadres photo numériques, ...). Cependant les équipements d'un réseau UPnP. ne sont pas conçus pour communiquer avec un équipement n'accédant pas au réseau UPnP. En effet, le mécanisme de découverte d'entités UPnP utilise un envoi de commande en mode "multicast" (multidiffusion) qui ne permet que de découvrir des entités présentes dans un réseau-local.

Différentes technologies permettent d'établir une connexion à réseau dans le but de commander une entité de ce réseau à partir d'un terminal d'accédant pas à ce réseau. Une solution consiste à mettre en oeuvre un tunnel sécurisé VPN (Virtual Private Network) pour accéder à ce réseau. Une autre-solution couramment utilisée consiste à faire appel à une architecture IMS (IP Multimedia Subsystem). An example can be found in WO2008/054270.

Les solutions à base de tunnel VPN ou architecture IMS existantes sont, quant à elles, relativement lourdes et complexes à mettre en oeuvre. En outre, avec les solutions à base de tunnel VPN, des problèmes de conflit d'adresses se posent. Les architectures IMS ne sont pas forcément mise à disposition librement des utilisateurs du grand public.

Dans le cas où le réseau visé est un réseau domestique, une autre solution consisterait à utiliser un "proxy" inverse HTTP (reverse proxy, selon la terminologie anglo-saxonne) présent sur certaines passerelles résidentielles d'accès à ces réseaux domestiques pour recevoir des requêtes entrantes d'obtention de contenus et les relayer vers les entités destinataires.

Cependant, pour des raisons de coût, les passerelles résidentielles possèdent souvent de faibles ressources, en particulier un processeur très peu puissant, et, lorsqu'un proxy inverse HTTP est embarqué sur cette passerelle, elles ne supportent pas plusieurs flux d'accès simultanés à plusieurs contenus via ce proxy HTTP

il apparaît ainsi un besoin pour-une solution d'accès à des contenus d'un réseau local à partir d'un terminal n'accédant pas à ce réseau, qui ne surcharge pas le processeur de la passerelle d'accès à ce réseau et qui soit applicable pour une mise en communication d'un serveur-de contenus UPnP de ce réseau avec ce terminal en vue d'une restitution de ce contenu sur le terminal.

Un-des buts de l'invention est de remédier à des problèmes, inconvénients ou insuffisances de l'état de la technique et/ou d'y apporter des améliorations.

L'invention concerne, selon un premier aspect, un procédé pour fournir à un équipement un accès à un contenu référencé par un serveur de contenus d'un réseau local, le procedé comprenant, une étape de fourniture audit équipement, par un module mandataire apte à recevoir dudit équipement des requêtes destinées audit serveur de contenus, d'une adresse temporaire dudit contenu pointant vers une entité du réseau, ladite entité étant conçue pour commander, suite à une réception d'une requête d'accès audit contenu, une mise en place pour ledit accès, par une passerelle d'accès audit réseau, d'un mappage entre un premier port dit externe de la passerelle d'accès et un deuxième port dit interne du serveur de contenus.

Corrélativement l'invention concerne un module mandataire d'un réseau local pour permettre à un équipement d'accéder à un contenu référencé par un serveur de contenus dudit réseau, le module mandataire comprenant des moyens pour recevoir dudit équipement des requêtes destinées audit serveur de contenus, ledit module mandataire comprenant des moyens pour fournir audit équipement une adresse temporaire pointant vers une entité dudit réseau conçue pour commander, suite à la réception d'une requête d'accès audit contenu, une mise en place pour ledit accès, par une passerelle d'accès audit réseau, d'un mappage entre un premier port dit externe de la passerelle d'accès et un deuxième port dit interne du serveur de contenus.

Corrélativement l'invention concerne en outre un module de gestion d'accès d'un réseau pour fournir à un équipement un accès à un contenu référencé par un serveur de contenus dudit réseau, ledit module étant apte à commander, suite à une réception d'une requête d'accès comprenant une adresse temporaire générée pour ledit contenu, une mise en place pour ledit accès, par une passerelle d'accès audit réseau, d'un mappage entre un premier port dit externe de la passerelle d'accès et un deuxième port dit interne du serveur de contenus.

Cette invention propose, au lieu d'utiliser la fonction de relais d'un proxy inverse HTTP, d'exploiter les fonctions de mappage de port et de traduction d'adresses proposées par les passerelles et de créer un mappage pour chaque accès à un contenu.

En outre, un serveur agissant comme mandataire du serveur de contenus du réseau local, prend en charge la fourniture des adresses temporaires à utiliser pour formuler et diriger une requête d'accès au contenu considéré.

Du fait de l'utilisation d'une technique de mappage de port, c'est l'accélérateur de la passerelle (sous forme de coprocesseur ou de circuit intégré spécialisé), dédié à la traduction d'adresse, qui prend en -charge la réception et la transmission des -flux et non le processeur principal de la passerelle. Dans le cas de l'invention, un tel accélérateur prend en charge le traitement des paquets de données, notamment la traduction des adresses pour l'aiguillage de ces paquets.

L'invention tire ainsi profit des accélérateurs généralement présents dans les passerelles pour assurer une fonction de mappage et de traduction d'adresse, tout en réduisant le nombre de ports externes ouverts par la création de mappage.

Contrairement à une architecture classique, la solution proposée ne nécessite donc pas l'emploi dans une passerelle d'un reverse proxy inverse HTTP, mais repose sur deux entités coopérant pour permettre un accès à un contenu: d'une part, le module mandataire selon l'invention et, d'autre part, un module de gestion d'accès selon l'invention.

Ces deux entités peuvent être mises en oeuvre dans un même logiciel ou sous forme de deux composants logiciels distincts, aptes à communiquer entre eux. Ces deux entités peuvent s'exécuter sur une passerelle d'accès au réseau local ou sur un autre équipement, par exemple un routeur ou un serveur de stockage en réseau (NAS, Network Attached Storage).

Lorsque ces deux entités sont mises en oeuvre dans une passerelle d'accès au réseau, elles ne surchargent pas le processeur de la passerelle, compte-tenu de la présence supposée d'un accélérateur pour la mise en oeuvre de la traduction d'adresse, conformément aux mappages définis, pour un aiguillage correct des paquets reçus par cette passerelle.

En outre, dans ce cas, ces deux entités s'exécutant dans un équipement qui, comme la passerelle GW1 et contrairement à un ordinateur personnel, est presque toujours en service, elles autorisent un accès distant au contenu avec une disponibilité quasi permanente.

Selon un mode de réalisation du procédé selon l'invention, le mappage mis en place est temporaire et destiné à être supprimé après la fin dudit accès. Le mappage n'est donc mis en place que pour la durée de l'accès. De cette manière, on limite le nombre de mappages en place à un instant donné et donc le risque d'intrusion dans le réseau via les ports externes de la passerelle.

Selon un mode de réalisation du procédé selon l'invention, une durée d'inactivité est définie pour ledit mappage, ledit mappage étant destiné à être supprimé si aucun paquet n'est reçu via ledit port externe pendant une telle- durée. Ceci permet d'éviter que des mappages ne subsistent inutilement en créant une faille de sécurité pour le réseau local.

Selon un mode de réalisation, le procédé selon l'invention comprend une étape de génération et d'envoi, par le module mandataire, audit équipement d'un code d'accès à usage unique, réservé pour ledit accès audit contenu, destiné à être fourni avec ladite requête d'accès, ledit mappage-n'étant mis en place que si le code d'accès fourni avec ladite requête est valide. Ceci permet de renforcer la sécurité du mécanisme d'accès, puisque qu'un code donné ne pourra être utilisé que pour un seul accès et un seul contenu, et non pour un accès ultérieur ou un autre contenu. En outre, on supprime le risque qu'un tiers intercepte la requête d'accès au contenu et puisse l'utiliser pour accéder à nouveau au contenu.

Selon un mode de réalisation du procédé selon l'invention, l'adresse temporaire fournie identifie ladite passerelle d'accès et un port de communication de ladite passerelle d'accès sur lequel la requête d'accès est destinée à être envoyée. Ainsi l'adresse temporaire peut être utilisée directement par l'équipement pour constituer et émettre la requête d'accès au contenu.

Selon un deuxième aspect, l'invention concerne un module de configuration d'une passerelle d'accès à un réseau, le module de configuration comprenant des moyens pour recevoir et traiter une commande de mise en place, en vue d'un accès à un contenu référencé par un serveur de contenus dudit réseau, d'un mappage entre un premier port dit externe de la passerelle d'accès et un deuxième port dit interne du serveur de contenus, ledit module de configuration comprenant des moyens pour supprimer ledit mappage si aucun paquet n'est reçu via ledit port externe pendant une durée d'inactivité définie dans ladite commande.

Ce module de configuration permet la configuration d'un mappage temporaire convenant pour la mise en oeuvre de l'invention.

Selon un troisième aspect, l'invention concerne un système de communication comportant:
- un équipement d'un utilisateur;
- un serveur de contenus, connecté à un réseau local;
- une passerelle domestique, servant de passerelle d'accès au réseau local comportant un module mandataire selon l'invention permettant à l'équipement d'accéder à un contenu référencé par le serveur de contenus du réseau.

Selon un quatrième aspect, l'invention concerne un terminal comportant un module d'accès client permettant à un utilisateur de sélectionner un contenu référencé par un serveur de contenus d'un réseau local et de piloter la restitution du contenu, le module d'accès client est apte à communiquer avec un module mandataire selon l'invention mis en oeuvre dans une passerelle domestique, servant de passerelle d'accès au réseau local.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module mandataire et/ou d'un module de gestion selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs. sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal; serveur, passerelle, set top box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De- la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente une séquence d'envoi de messages et d'étapes correspondant à un mode de réalisation du procédé selon l'invention.

L'invention est décrite plus en détail dans le cas de son application à une méthode d'accès aux contenus référencés par un serveur de contenus d'un réseau local RS1, à partir d'un équipement ne faisant pas partie de ce réseau. Le réseau RS1 est également nommé ici réseau source. Il s'agit par exemple de contenus multimédia (vidéo et / ou audio).

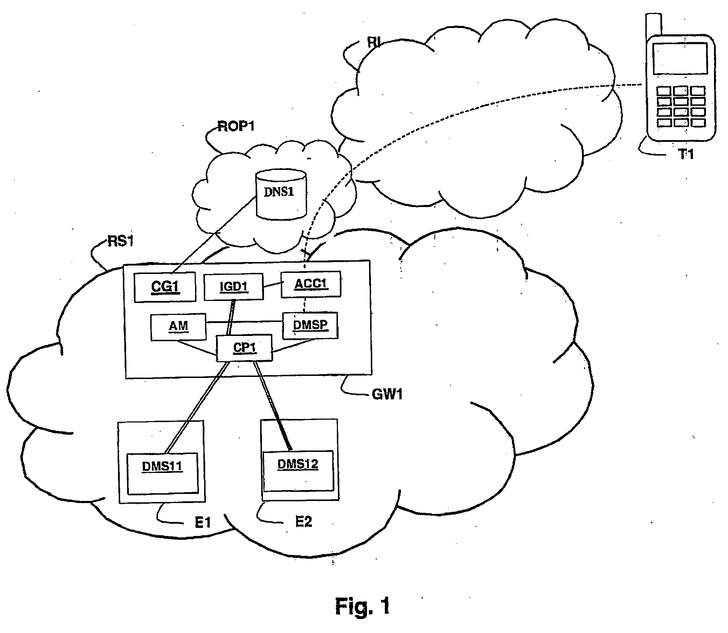

Le système représenté à la figure 1 est organisé autour du réseau local RS1, sous forme par exemple de réseau domestique, et d'un réseau étendu RI, par exemple le réseau Internet. Ce système comprend les entités suivantes:
- un équipement T1 d'un utilisateur U1, sous forme par exemple de terminal mobile;
- une passerelle domestique GW1, servant de passerelle d'accès au réseau source RS1;
- deux serveur de contenus DMS1 et DMS2, connectés au réseau source RS1 et intégrés respectivement dans un équipement E1 et un équipement E2;
- un serveur DNS1 de noms de domaine (Domain Name Serveur, DynDNS) présent dans un réseau opérateur ROP1 d'un opérateur de réseau fournisseur de la passerelle domestique GW1, ce réseau opérateur ROP1 formant réseau d'accès au réseau Internet pour le réseau source RS1.

### Serveurs de contenus DMS1 et DM2

Le serveur de contenus DMS1 (ou DMS2)- est par exemple un serveur de contenus conforme au standard UPnP (Universal Plug and. Play), nommé "Digital Media Server" (DMS) dans le contexte de l'architecture UPnP / DLNA. En conséquence, il présente une interface de commande, conforme au standard UPnP et est pilotable uniquement au moyen de requêtes UPnP. L'envoi d'une requête UPNP est réalisé usuellement au moyen d'un appel de fonction via une interface logicielle de programmation (API, Application Programming Interface) de l'entité destinataire. Toutefois le mécanisme proposé par l'invention est transposable à d'autres protocoles utilisables pour piloter un serveur de contenus.

Le standard UPnP fournit des mécanismes et une architecture permettant une mise en relation - selon un mécanisme similaire à celui utilisé dans un réseau de pairs - entre les entités UPnP d'un même réseau. Chaque entité UPnP peut être intégrée physiquement dans l'un quelconque des équipements d'un réseau : terminal ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Le protocole UPnP utilise notamment les protocoles TCP/UDP/IP (Transmission Control Protocol/User Datagram Protocol/internet Protocol) pour le transport des requêtes UPnP.

Dans le contexte de ce document, une entité est dite entité UPnP / DLNA si elle est conforme au standard UPnP / DLNA ou à un autre standard équivalent ou dérivé, notamment si elle utilise un protocole de commande conforme à un tel standard.

Chaque serveur de contenus DMS1 et/ou DMS2 affecte une adresse à chacun des contenus qu'il référence: une telle adresse URI_ORIG est généralement sous forme d'identifiant URI (Uniform Ressource Identifier), définissant un chemin d'accès à ce contenu, par exemple :
http://192.168.1.10:9000/dIna/objectID=1234

Ce chemin d'accès est composé de :
- l'adresse IP "192.168.1.10" de l'entité auprès de laquelle ce contenu peut être obtenu, cette l'adresse étant une adresse privée, et donc accessible uniquement à partir d'une entité du réseau RS1 ;
- un identifiant de port de communication "9000" de l'entité auprès de laquelle ce contenu peut être obtenu;
- un sous-chemin d'accès "dIna/objectID=1234" défini relativement à l'entité auprès de laquelle ce contenu peut être obtenu, ce sous-chemin d'accès comprenant lui-même un identifiant "objectID=1234" du contenu proprement dit, attribué par l'éntité auprès de laquelle ce contenu peut être obtenu,
l'entité auprès de laquelle-ce contenu peut être obtenu étant en l'occurrence le serveur de contenus DMS1 ou DMS2 référençant le contenu considéré.

Le sous-chemin d'accès est nommé par la suite URI_ORIG_PATH.

### Equipement T1

Dans l'exemple de réalisation décrit ici, l'équipement T1 est un terminal de téléphonie mobile et présente l'architecture matérielle d'un ordinateur. Il comporte notamment des moyens de communication pour communiquer à travers le réseau Internet RI.

Le terminal T1 comprend au moins les deux entités suivantes:
- un module d'accès client RAC ("remote access client), présentant une interface utilisateur pour permettre à un utilisateur U1 de sélectionner un contenu à restituer et de piloter la restitution de ce contenu;
- un module MP1 de restitution de contenus, pilotable par le module d'accès client RAC; .

Le module d'accès client RAC est soit une application logicielle indépendante, soit une application cliente Web connectée à un serveur Web. Elle est apte à télécharger une liste de contenus référencés par l'un au moins des serveurs de contenus DMS1 ou DMS2 et à présenter cette liste à un utilisateur du terminal T1 via une interface utilisateur appropriée, à partir de laquelle un utilisateur peut sélectionner un contenu à restituer et piloter la restitution de ce contenu. Dans ce but, Le module d'accès client RAC est apte à communiquer via le protocole HTTP ou HTTPS avec un module mandataire DMSP, mis en oeuvre dans la passerelle GW1 et qui sera décrit plus loin.

Le module d'accès client RAC est en outre configuré (par l'utilisateur) pour pouvoir se connecter au module mandataire DMSP. Dans ce but, le module d'accès client RAC a connaissance du nom de domaine associé la passerelle et du numéro de port externe à utiliser pour établir une connexion avec le module-mandataire DMSP.

### Passerelle GW1

La passerelle GW1 est une passerelle pour l'interconnexion du réseau source RS1 avec le réseau Internet RI. Elle permet aux terminaux du réseau source RS1 d'accéder au réseau Internet RI. Inversement, la passerelle permet- sous réserve que des droits pour un tel accès soient accordés - à des équipements d'un réseau autre que le réseau source RS1 de communiquer avec un terminal du réseau source réseau source RS1.

La passerelle GW1 comprend au moins les entités suivantes:
- un module d'interconnexion CG1,
- un module de configuration IGD1 pour la configuration de la passerelle GW1
- un module de traduction d'adresse ACC1 pour la traduction d'adresse des paquets conformément aux mappages définis par le module de configuration IGD1,
- un module de commande CP1, nommé également "point de contrôle",
- un module de gestion d'accès AM (Access Manager) selon l'invention ;
- un module mandataire DMSP selon l'invention, nommé également serveur mandataire.

### Module d'interconnexion CG1 et serveur DNS1

Le module d'interconnexion CG1 met en oeuvre les fonctions d'interconnexion entre le réseau source RS1 et le réseau Internet RI. Il comprend dans ce but une première interface de communication pour la communication avec les entités du réseau source RS1 et une deuxième interface de communication pour la communication via le réseau Internet RI, notamment avec les entités externes au réseau source RS1. Cette deuxième interface est utilisée pour communiquer avec un fournisseur d'accès à Internet (Internet Service Provider, ISP) de l'opérateur du réseau ROP, ainsi qu'avec le serveur de noms de domaine DNS1.

Le serveur DNS1 maintient une table de correspondance entre des adresses publiques et noms affectés aux équipements qu'il gère. En particulier, le nom affecté à la passerelle domestique GW1 est statique, c'est-à-dire ne change pas, mais l'adresse publique de la passerelle domestique GW1 change périodiquement. Il est donc nécessaire pour communiquer avec cette passerelle domestique GW1 de connaître son adresse publique courante, et pour cela d'interroger le serveur DNS1 à partir du nom de la GW1. Ce nom correspond au nom du domaine réseau géré par cette passerelle, et est-par exemple sous la forme:
myhome.dyndns.org

Ce nom peut être affecté automatiquement par l'opérateur de réseau fournissant la passerelle domestique GW1 ou configuré manuellement par un utilisateur de cette passerelle.

La configuration du nom de domaine associé à la passerelle domestique GW1 est effectuée au moyen du module d'interconnexion CG1 qui comprend un module client communiquant dans ce but avec le serveur DNS1.

### Module de configuration IGD1 et module de traduction d'adresse ACC1

Le module de configuration IGD1 est réalisé sous forme de dispositif UPnP IGD (Internet Gateway Device) ou de CGI (Common Gateway Interface), en charge notamment de la définition des mappages d'adresses et de port publics (dit externes) vis-à-vis des adresses et ports privés (dit internes) des équipements du réseau source RS1. De manière connue, un tel mappage permet à une entité extérieure au réseau source RS1 de communiquer directement avec un tel équipement de ce-réseau source RS1 au moyen d'une adresse et/ou port public, charge étant au module de traduction d'adresse ACC1 de rediriger le flux de données vers l'équipement visé.

Le module de traduction d'adresse ACC1 est un accélérateur, tel qu'évoqué en introduction, sous forme par exemple de coprocesseur ou de circuit intégré, dédié à la traduction des adresses et ports spécifiés dans les paquets de données. Le module de traduction d'adresse ACC1 met en oeuvre cette opération de traduction des paquets entrants dans le réseau conformément aux mappages définis par le module de configuration IGD1 et permet ainsi un aiguillage correct de ces paquets vers l'entité identifiée dans le mappage appliqué.

### Module de commande CP1

Le module de commande CP1 est un module apte à piloter le module de configuration IGD1 de la passerelle IGD1. Lorsque le module de configuration IGD1 est réalisé sous forme de dispositif UPnP, le module de commande CP1 est réalisé sous forme de "point de contrôle", conforme à UPnP, nommé "Control Point" ou "Digital Media Controller" dans le contexte de l'architecture UPnP / / DLNA.

Dans le contexte de l'invention, le module de -commande CP1 est notamment configuré pour:
- obtenir une liste des mappages définis.par le module de configuration IGD1 ;
- piloter le module de configuration IGD1 pour créer ou supprimer un mappage;
- affecter une durée d'inactivité (nommée "lease time" dans la terminologie anglo-saxonne) à un mappage à créer.

### Serveur mandataire DMSP

Le serveur mandataire DMSP est une entité mandataire (entité "proxy", selon la terminologie anglo-saxonne) associée à un ou plusieurs serveurs de contenus DMS1 et/ou DMS2: il sert d'intermédiaire de communication entre un serveur de contenus DMS1 et/ou DMS2 et une entité non-conforme à UPnP et/ou ne faisant pas partie du réseau source. Le serveur mandataire DMSP sert ainsi de "représentant" du serveur de contenus DMS1 vis-à-vis d'une telle entité. Grâce à la présence du serveur mandataire DMSP, le serveur de contenus DMS1 est pilotable à distance par une entité non-conforme à UPnP et/ou ne faisant pas partie du réseau source. IL est en particulier conçu pour recevoir d'un équipement des requêtes destinées au(x) serveur(s) de contenus pour lesquels il joue le rôle de mandataire et à transférer ces requêtes au serveur de contenu visé. Inversement, il est conçu pour réceptionner une réponse à une telle requête et pour transférer cette réponse à l'équipement émetteur de la requête.

Plus précisément, le serveur mandataire DMSP fait le lien entre, d'une part, les entités ne faisant pas partie du réseau RS1, et, d'autre part, et le monde UPnP du réseau domestique RS1. Dans ce but, il met en oeuvre deux interfaces:
- une première interface, conforme au protocole UPnP et correspondant à une interface de dispositif de commande UPnP (DMC, Digital Media Controller), pour d'une part envoyer des requêtes UPnP à une entité UPnP du réseau source RS1, notamment à un des serveurs de contenus DMS1 ou DMS2 et d'autre part recevoir et traiter les réponses à ces requêtes;
- une deuxième interface, utilisant un protocole distinct du protocole UPnP et approprié pour envoyer ou recevoir des requêtes non UPnP échangées avec une entité non UPnP et/ou une entité ne faisant pas partie du réseau source RS1. Le protocole utilisé ici est par exemple le protocole HTTP ou sa version sécurisée HTTPS.

Via sa première interface, le serveur mandataire DMSP est apte à dialoguer avec les entités UPnP du réseau RS1. En particulier, le serveur mandataire DMSP met en oeuvre les fonctions d'un "point de contrôle" UPnP (DMC, Digital Media Controller), notamment les fonctions de détection d'un serveur de contenu UPnP (DMS, Digital Media Server) et de consultation du répertoire de contenus (CDS; Content Directory Service) d'un tel serveur de contenu UPnP. Le serveur mandataire DMSP envoie dans ce but des commandes UPnP à travers cette première interface. Dans une alternative de réalisation, notamment lorsque le module de commande CP1 est réalisé sous forme de "point de contrôle" UPnP, le serveur mandataire DMSP ne comprend pas de "point de contrôle" UPnP mais compère avec le "point de contrôle" UPnP CP1: ceci permet de simplifier l'architecture logicielle de la passerelle GW1.

Via sa deuxième interface, le serveur mandataire DMSP est apte à dialoguer avec le module d'accès client RAC, s'exécutant au sein du terminal T1. Ce dialogue s'effectue selon une méthode appropriée, par exemple au moyen d'appels de procédure distante ou d'une requête de type "web service", conforme à un protocole choisi par exemple parmi XML-RPC, SOAP et REST. Les requêtes échangées entre le serveur mandataire DMSP et le module d'accès client RAC sont dans ce cas transportées en utilisant le protocole HTTP ou sa version sécurisée HTTPS.

Le serveur mandataire DMSP est configuré pour :
- recevoir via sa deuxième interface des requêtes non conformes au protocole UPnP, destinées au serveur de contenus DMS1,
- convertir ces requêtes non-conformes à UPnP en requêtes conformes au protocole UPnP et
- transmettre via sa première interface les requêtes après conversion au serveur de contenus DMS1.

Cette conversion de format de requête s'effectue par exemple par dés-encapsulation d'une requête UPnP, ayant été encapsulée dans une requête conforme au protocole utilisé pour la communication entre le serveur mandataire DMSP et le module d'accès client RAC. Cette opération de conversion de format ne modifie pas les données de la requête UPnP convertie, mais uniquement le format utilisé pour la transmettre. Notons ici qu'une transmission de requête conformément au protocole UPnP s'effectue généralement par appel de fonction d'une interface logicielle du module UPnP destinataire.

Un exemple de requête reçue via la deuxième interface est une requête d'obtention de métadonnées de contenus accessibles à partir d'un serveur de contenus UPnP du réseau source RS1. Le serveur mandataire DMSP est conçu pour convertir cette requête en une ou plusieurs requêtes nommées "Browse" dans le standard UPnP qui seront émises respectivement à destination des différents serveurs de contenus UPnP du réseau source RS1.

En plus de la conversion de format, le serveur mandataire DMSP exécute le cas échéant des opérations telles que:
- modification ou filtrage des paràmètres de la requête incidente et/ou
- ajout de nouveaux paramètres dans la ou les requêtes à émettre et/ou
- décomposition de la requête incidente en une ou plusieurs requêtes à émettre ou, inversement, combinaison de plusieurse requêtes incidentes en une seule requête à émettre.

Inversement, le serveur mandataire DMSP reçoit via sa première interface du serveur de contenus DMS1 des réponses à appel de fonction ou messages, incluant ou non des contenus stockés par ce serveur, conformes au protocole UPnP, les convertit en requêtes conformes à un deuxième protocole, approprié pour la communication avec une entité non-conforme à UPnP et/ou ne faisant pas partie du réseau source, et transmet via sa deuxième interface les requêtes ainsi converties à l'entité destinatrice. Cette conversion de format de requête s'effectue par exemple par encapsulation d'une requête UPnP, dans une requête conforme au deuxième protocole. Ce deuxième protocole est typiquement un protocole de service Web, basé sur le protocole HTTP, par exemple SOAP, XMLHttpRequest, XMLRPC, REST...

Cette conversion ne modifie pas les données de la requête UPnP convertie, mais uniquement le format utilisé pour la transmettre.

En plus de cette conversion de format, le serveur mandataire DMSP exécute le cas échéant des opérations telles que:
- modification ou filtrage des paramètres de la requête incidente et/ou
- ajout de nouveaux paramètres dans la ou les requêtes à émettre et/ou
- décomposition de la requête incidente en une ou plusieurs requêtes à émettre ou, inversement, combinaison de plusieurs requêtes incidentes en une seule requête à émettre.

Via sa deuxième interface; le serveur mandataire DMSP est apte également à recevoir et retransmettre des requêtes HTTP ne transportant pas de requête de type "web service". Il s'agit notamment de requêtes de transmission de contenus ou de requête d'obtention de contenu ne nécessitant pas de conversion vers une requête ou réponse UPnP.

Le serveur mandataire DMSP sert ainsi de mandataire pour le compte du serveur de contenus DMS1 (ou DMS2) pour l'envoi (respectivement la réception) de requêtes que ce serveur n'est pas apte à envoyer (respectivement recevoir) lui-même.-Le serveur mandataire DMSP est intégré dans la passerelle domestique GW1 ou dans un autre équipement du réseau source RS1. Il est bien entendu envisageable cependant que les différentes fonctions de ce module soit implémentées de manière répartie, c'est-à-dire dans des équipements physiques distincts, sous réserve qu'un lien de communication soit prévu entre les entités mettant en oeuvre respectivement chacune de-ces fonctions.

Lorsque le serveur mandataire DMSP n'est- pas intégré dans la passerelle domestique GW1, le serveur mandataire DMSP est conçu pour envoyer des-données d'adressage au- module de configuration IGD1 du module d'interconnexion CG1. Le module de configuration IGD1 définit alors un mappage afin que les requêtes qui sont destinées au serveur mandataire DMSP soient redirigées vers ce serveur mandataire DMSP par le module de traduction d'adresse ACC1. Dans ce but, le serveur mandataire DMSP transmet- au module de configuration IGD1 du module d'interconnexion CG1 un numéro de port et une adresse IP au moyen desquels le serveur mandataire DMSP est susceptible d'être joint. Ce numéro de port et adresse 1P sont stockés en correspondance avec le nom de domaine associé à la passerelle domestique GW1 et un numéro de port public affecté au serveur mandataire DMSP.

Lorsque le serveur mandataire DMSP est intégré dans la passerelle domestique GW1 aucun mappage n'est nécessaire dans la passerelle domestique GW1 pour joindre le serveur mandataire DMSP à partir d'un équipement externe au réseau source RS1.

Outre les conversions de format de requête du protocole UPnP vers un autre protocole de commande à distance utilisé entre les modules relais DMS-R1 et DAMS-R2 ou vice-versa, le serveur mandataire DMSP met en oeuvre une fonction de traduction des adresses URI_ORIG affectées par les serveurs de contenus DMS1 ou DMS2 du réseau RS1 aux contenus référencés par ces serveurs.

Cette traduction d'adresse vise à la fois à fournir une adresse temporaire URI_TEMP, utilisable par une entité n'appartenant pas au réseau RS1, par exemple par le terminal T1, pour l'accès à un contenu du réseau source RS1 et à contrôler la création de mappage de port de communication pour l'accès à ce contenu.

La traduction d'adresse opérée par le serveur mandataire- DMSP consiste à remplacer, dans l'adresse originale URI_ORIG d'un contenu - c'est-à-dire dans l'adresse affectée par le serveur de contenus DMS1 ou DMS2 - l'adresse IP et le port du serveur de contenu dans lequel est stocké ce contenu, par l'adresse IP (ou le nom de domaine public) de la passerelle domestique GW1 et le numéro de port publie affecté au module de gestion d'accès AM, de manière à ce que l'adresse temporaire URI_TEMP après traduction soit adaptée pour un accès à ce contenu via le module de gestion d'accès AM et via la passerelle domestique GW1, à partir d'une entité extérieure au réseau source RS1, notamment à partir du module d'accès client RAC du terminal T1.

Une adresse temporaire URI_TEMP après traduction par le serveur mandataire DMSP sera donc sous la forme:
http://GW1 DNS:AM PORT/download?uri=URI ORIG&AccéssKev=CQDE1
et composée de:
- l'adresse originale URI_ORIG du contenu, telle qu'affectée par le serveur de contenus DMS1 ou DMS2 qui référence ce contenu;
- un code d'accès GODE1, généré par le serveur mandataire DMSP et attribué à ce contenu pour un unique accès, ce code étant destiné à être fourni avec la requête d'accès à ce contenu;
- un nom de domaine GW1_DNS (Domain Name Server) ou une adresse -IP publique statique affectée à la passerelle domestique GW1 ;
- un port externe AM_PORT de la passerelle domestique GW1 via lequel le module de gestion d'accès AM peut être adressé.

Une telle traduction d'adresse est nécessaire pour éviter d'éventuels conflits avec des serveurs de contenus ou contenus provenant d'un autre réseau. Elle est opérée soit systématiquement sur tous les identifiants URI contenus dans les requêtes émises par le serveur mandataire DMSP à destination du terminal T1, soit sur demande du module d'accès client RAC sur une adresse URI particulière correspondant à un contenu auquel l'utilisateur du terminal T1 souhaite accéder. Cette opération de traduction d'adresse est susceptible d'être opérée par le serveur mandataire DMSP, dans la mesure où, par configuration, celui-ci a connaissance des paramètres GW1_DNS et AM_PORT.

Le code d'accès CODE1 est un code à usage unique, réservé pour un accès et un seul, au seul contenu pour lequel il a été généré. De manière à pouvoir effectuer un contrôle d'accès au moyen de ce- code d'accès CODE1, ce code est générée par exemple par un algorithme de hachage à partir de l'adresse originale URf_ORIG. Tout autre méthode de génération de code d'accès à usage unique est également utilisable. En complément, un identifiant du module d'accès client RAC du terminal T1 peut également être encodé (par hachage ou autre) dans ce code d'accès pour vérifier et garantir que seul ce module d'accès client RAC soit habilité à accéder à ce contenu au moyen de ce code d'accès.

Après génération- du code- d'accès CODE1, le serveur mandataire DMSP enregistre, dans une base de données prévue à cet effet, le code d'accès CODE1 en association avec l'adresse originale URI_ORIG.

Le serveur mandataire DMSP est en outre conçu pour collecter et agréger les métadonnées de contenus associées à des contenus stockés par différents serveurs de contenus DMS1 ou DMS2 du réseau source RS1. Lorsque ces métadonnées comprennent des adresses URI de contenus, une traduction de ces adresses est opérée avant ou après agrégation par le serveur mandataire DMSP, selon ce qui vient d'être décrit. Les métadonnées ainsi modifiées sont transmises vers le module d'accès client RAC.

### Module de gestion d'accès AM (Access Manager)

Le module de gestion d'accès AM est conçu pour recevoir et valider les requêtes d'accès à l'un des contenus référencés par un des serveurs de contenus DMS1 ou DMS2 représentés par le serveur mandataire DMSP.

Une telle requête d'accès comprend une adresse du contenu requis. Cette adresse est sous la forme d'un chemin d'accès, Identifiant le module de gestion d'accès comme entité auprès de laquelle ce contenu peut être obtenu et comprenant un code d'accès. Cette adresse est en l'occurrence l'adresse temporaire URI_TEMP, générée par le serveur mandataire DMSP par traduction de l'adresse originale URI_ORIG du contenu considéré et comprenant le code d'accès CODE1.

Le module de gestion d'accès AM est conçu pour vérifier la validité de ce code d'accès CODE1 et pour interdire l'accès au contenu que lorsque ce code est invalide. Cette vérification est effectuée par le serveur mandataire DMSP sur demande du module de gestion d'accès et consiste à vérifier si l'adresse originale URI_ORIG est bien associée au code d'accès CODE1 fourni simultanément.

Ce code -d'accès permet de renforcer la sécurité de la méthode d'accès selon l'invention. En effet, les serveurs-de contenus UPnP DMSL ou DMS2 ne supportant pas le protocole HTTPS, le téléchargement d'un contenu par le terminal T1 se fait uniquement par envoi de requête HTTP: ce téléchargement est donc non sécurisé. Le risque existe qu'un tiers intercepte la requête d'obtention de contenu comprenant l'adresse temporaire URL_TEMP et puisse l'utiliser pour accéder à nouveau au contenu. C'est pour se protéger contre ce risque que le code d'accès au contenu est temporaire et à usage unique.

Le module de gestion d'accès AM est en outre conçu pour coopérer avec le module de commande CP1 afin de mettre en place un mappage de port temporaire au moyen du module de configuration IGD1, ce mappage étant valable pour la durée de l'accès audit contenu et associe un port externe PORT1_EXT de la passerelle GW1 avec un port interne PORT1_INT du serveur de contenu auprès duquel le contenu peut être obtenu.

Dans ce but, le module de gestion d'accès AM génère, à partir de l'adresse temporaire URI_TEMP reçue dans la requête d'accès, l'adresse originale URI_ORIG, en opérant la traduction inverse de cette opérée par le serveur mandataire DMSP, c'est-à-dire en extrayant l'adresse originale URI_ORIG de l'adresse temporaire URI_TEMP puis le numéro de port PORT1_INT indiqué dans cette adresse originale URI_ORIG en association avec l'adresse IP de l'entité auprès de laquelle ce contenu peut être obtenu: c'est ce numéro de port PORT1_INT qui est utilisé comme port Interne dans le mappage à mettre en place par le module de configuration IGD1 de la passerelle.

Sur demande du module de gestion d'accès AM, le module de commande envoie au module de configuration IGD1 une commande de création de mappage entre les ports externe PORT1_EXT et interne PORT1_INT. Le mappage ainsi défini est destiné à être utilisé exclusivement pour un accès unique à un contenu unique: pour chaque autre contenu ou chaque autre accès à ce même contenu, un nouveau mappage de ports devra être mis en place.

Par configuration, le module de gestion d'accès AM a connaissance d'une gamme prédéfinie de ports externes (par exemple les ports de 80800 à 80999) qu'il peut utiliser pour définir un mappage à mettre en place par le module de configuration IGD1 de la passerelle GW1. Plusieurs méthodes peuvent être adoptées pour définir le port externe qui sera utilisé pour le mappage.

Selon une première méthode, le-module de gestion d'accès AM utilise le module de commande CP1 pour lister les mappages de port mis en place par le module de configuration GD1 en utilisant la commande UPnP nommée "GetGenericPortMapping" du service UPnP nommé "WANPPPConnection" du module de configuration IGD1. En fonction de la gamme prédéfinie de ports externes et de la liste des mappages mis en place, le module de gestion d'accès AM sélectionne un port externe temporaire PORT1_EXT.

Selon une deuxième méthode, le module de gestion d'accès AM- sélectionne aléatoirement un numéro de port externe dans la gamme prédéfinie de ports externes et vérifie s'il est déjà ouvert en utilisant la commande UPnP nommée "GetSpeciftcPortMapping" du service "WANPPPConnection" du module de configuration IGD1. S'il existe déjà un mappage de port utilisant ce numéro de port externe, Il réitère la sélection de numéro de port jusqu'à trouver un port externe non encore utilisé dans un mappage mis en place par le module de configuration IGD1.

Le module de commande CP1 ajoute un mappage de port à mettre en place, en envoyant une commande UPnP nommée "AddPortMapping" au service "WANPPPConnection" du module de configuration IGD1, cette commande comprenant les paramètres suivants :
"ExternalPort" : le port externe temporaire PORT1_EXT
"RemoteHost" : l'adresse IP du module d'accès client RAC
"MappingProtocoI" : http
"InternalClient" : l'adresse IP du serveur de contenu DMS1 ou DMS2 qui référence le contenu considéré
"InternalPort" : le port PORT1_INT défini dans l'adresse originale URI_ORlG

Un nouveau paramètre (optionnel), défini par l'invention, est spécifié dans la commande "AddPortMapping" : il s'agit du paramètre nommé "IdleTimeout" qui permet de définir une durée d'inactivité (X secondes par exemple) au bout de laquelle le mappage de port défini doit être supprimé. Ainsi, lorsqu'aucun paquet de données ne parviendra sur le port externe défini dans le mappage pendant une telle durée, le mappage sera supprimé.

L'ajout d'un tel mappage temporaire est en outre protégé par le mécanisme de code d'accès généré par le serveur mandataire DMSP et validé par le module de gestion d'accès AM. L'ouverture de multiples ports externes engendrant des trous de sécurité, un pirate qui ferait du scanning de ports sur la passerelle GW1 pourrait accéder au réseau domestique de l'utilisateur. Il se- pose donc le problème de la suppression du mappage temporaire après la fin de l'accès au contenu pour lequel il a été créé. Ce problème est résolu avec le paramètre "IdleTimeout" qui indique à la passerelle la durée d'inactivité autorisée pour le port externe du mappage temporaire.

Le module de gestion d'accès AM est également conçu pour, lorsque le mappage est effectif, rediriger la requête d'accès vers l'entité identifiée dans l'adresse originale URI_ORIG comme étant celle auprès de laquelle le contenu peut être obtenu, de manière à ce que l'accès au contenu soit effectué via les ports externe-PORT1_EXT et interne PORT1_INT définis lors du mappage temporaire.

Le module de gestion d'accès effectue dans ce but une conversion d'adresse sur l'adresse originale URI_ORIG pour générer une adresse de redirection URI_REDIRECT convenant pour un accès au contenu via les ports externe PORT1_EXT et interne PORT1_INT définis lors du mappage temporaire, l'adresse de redirection UFU_REDIRECT étant de la forme:
http://GW1 DNS:PORT1 EXT/URI ORIG PATH
et comprenant:
- le sous-chemin d'accès URI_ORIG_PATH de l'adresse originale URI_ORIG du contenu, telle qu'affectée par le serveur de contenus DMS1 ou DMS2 qui référence ce contenu;
- un nom de domaine GW1_DNS (Domain Name Server) ou une adresse IP publique statique affectée à la passerelle domestique GW1;
- le port externe PORT1_EXT de la passerelle domestique GW1 ouvert lors de l'opération de mappage.

Une réponse HTTP, comprenant une adresse de redirection URI_REDIRECT ainsi constituée, provoque l'acheminement des données de la requête et du flux de données de réponse à travers le port PORT1_EXT de la passerelle domestique GW1 et le port PORT1_INT du serveur de contenus DMS1 ou DMS2. Elle permet donc une mise en communication directe de l'émetteur de la requête avec le serveur de contenus DMS1 ou DMS2 considéré.

Le serveur mandataire DMSP, le module de gestion d'accès, AM et le point de contrôle" sont de préférence mis en oeuvre dans un équipement qui, comme la passerelle GW1 et contrairement à un ordinateur personnel, est presque toujours en service, de manière à permettre un accès distant au contenu avec une disponibilité quasi-permanente.

Dans le cas où le serveur mandataire DMSP et le module de gestion d'accès AM seraient mis en oeuvre sur d'autres équipements, il serait nécessaire d'ouvrir pour ces deux entités un port externe sur la passerelle au moyen du module de configuration IGD1 et de mettre en-place un mappage de port pour atteindre chacune de ces entités via le module de configuration IGD1. Dans l'hypothèse où ces deux entités seraient intégrées dans un même logiciel, un seul mappage de port serait nécessaire et valable pour ces deux entités.

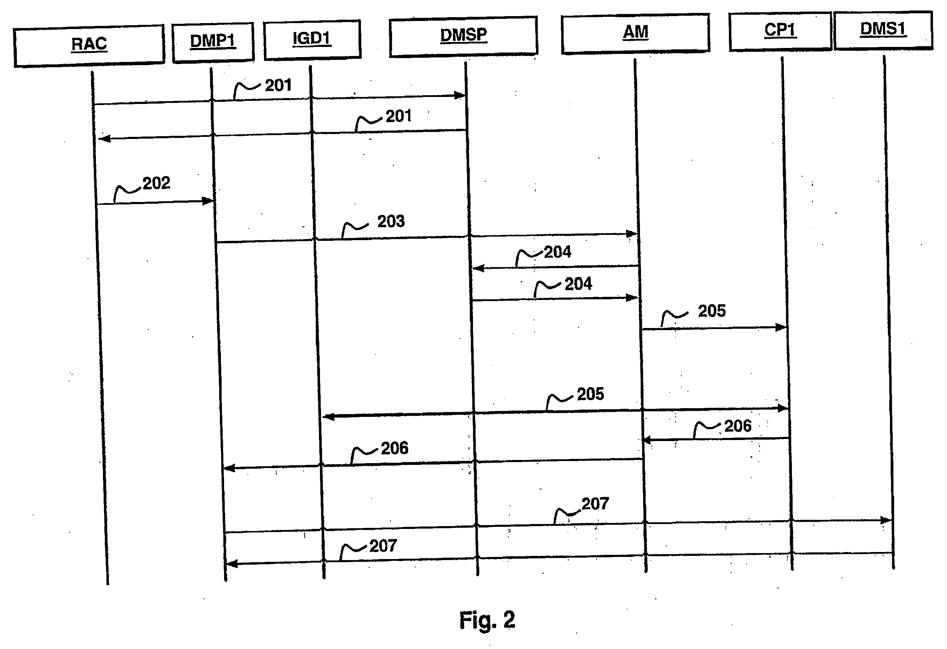

Un mode de réalisation du procédé selon l'invention est maintenant décrit par référence à la figure 2.

Lors d'une étape initiale 200 (non représentée), l'utilisateur U1 du terminal T1 établit au moyen du module d'accès client RAC une connexion avec le serveur mandataire DMSP. L'utilisateur U1 s'authentifie auprès du serveur mandataire DMSP et une session de communication sécurisée est établie au moyen du protocole HTTPS entre le module d'accès client RAC et le serveur mandataire DMSP.

Une liste des contenus référencés par les serveurs de contenus DMS1 et DMS2 est fournie à l'utilisateur T1 lors de cette session.

On suppose que l'utilisateur U1 sélectionne un contenu C1 du serveur de contenus DMS1, auquel est affectée l'adresse originale URI_ORIG décrite ci-dessus. Cette adresse est fournie au serveur mandataire DMSP par le serveur de contenu DMS1 dans les métadonnées du contenu C1, en réponse à une commande UPnP nommée "Browse", émise par le serveur mandataire DMSP.

Lors d'une étape 201, sur demande du modula d'accès client RAC comprenant t'adresse URI_ORIG du contenu C1 sélectionné, le serveur mandataire DMSP fournit au module d'accès client RAC une adresse temporaire URI_TEMP associée au contenu C1 sélectionné, générée par le serveur mandataire DMSP selon ce qui a été décrit plus haut, par traduction de l'adresse originale URI_ORIG du contenu C1. Pour rappel, cette adresse temporaire URI_TEMP comprend un code d'accès CODE1 à usage unique et l'adresse originale URI_ORIG. Le serveur mandataire DMSP mémorise ensuite le code d'accès CODE1 en association avec l'adresse originale URI_ORIG.

Lors d'une étape 202, le module d'accès client RAC -envoie au module de restitution MP1 du terminal T1 une commande de restitution du contenu C1, commande comprenant l'adresse temporaire URL_TEMP du contenu C1, telle que fournie par le serveur mandataire DMSP.

Lors d'une étape 203, suite à la réception de la commande de restitution, le module de restitution MP1 du terminal T1 émet à destination du module de gestion d'accès AM de la passerelle GW1 une requête d'accès au contenu C1, sous forme de requête HTTP de type "GET", comprenant l'adresse temporaire URL_TEMP, afin d'obtenir le contenu C1 proprement dit.

Lors d'une étape 204, suite à la réception de la requête d'accès au contenu C1, le module de gestion d'accès AM extrait de l'adresse temporaire URL_TEMR reçue-l'adresse originale URL_ORIG et le code d'accès CODE1, puis interroge le serveur mandataire DMSP pour vérifier la validité de ce code d'accès.

Lorsque le code d'accès est valide, le serveur mandataire DMSP supprime l'association mémorisée entre le code d'accès CODE1 et l'adresse originale URL_ORIG. Le code d'accès fourni est ainsi invalidé après réception de la requête d'accès qui le contient.

Si le code d'accès n'est pas valide, un message d'erreur est envoyé par le module de gestion d'accès AM au module de restitution MP1 du terminal T1.

Lors d'une étape 205, le module de gestion d'accès AM commande, en passant par le module de commande CP1, la mise en place par le module de configuration IGD1 d'un nouveau mappage de ports de communication pour la passerelle GW1, ce nouveau mappage étant temporaire et réservé pour un accès unique au contenu C1.

Ce mappage utilise comme port interne PORT1_INT le port de communication du serveur de contenus DMS1 défini dans l'adresse original URI_ORIG du contenu C1 et comme port externe PORT1_EXT un port de la passerelle GW1 sélectionné par le module de gestion d'accès AM.

Lors d'une étape 206, lorsque le module de gestion d'accès AM reçoit du module de commande CP1 une confirmation de la mise eh place du mappage demandé, il émet, en réponse à la requête d'accès du module de restitution MP1, une réponse HTTP, sous forme de requête de redirection, comprenant un code de redirection (code HTTP 302 pour une redirection temporaire) et l'adresse de redirection URI_REDIRECT, générée comme décrit ci-dessus à partir de l'adresse originale URI_ORIG et du port externe PORT1_EXT associé au mappage temporaire mis en place.

Cette requête de redirection sert donc à demander la redirection de la requête d'accès vers le port externe PORT1_EXT de la passerelle GW1. Compte-tenu du mappage défini pour ce port externe, la requête d'accès sera, après redirection vers ce port externe, routée-par la passerelle GW1 vers le serveur dé contenus DMS1. Le module de restitution MP1, émetteur de cette requête d'accès, sera ainsi mis enrelation avec ce serveur de contenus DMS1.

Lors d'une étape 207; sur réception de la requête de redirection, le module de restitution MP1 du terminal T1 émet une autre requête HTTP "GET" vers l'adresse de redirection URI_REDIRECT reçue. Cette adresse de redirection URI_REDIRECT. pointe vers le serveur de contenu DMS1 stockant le contenu C1 et permet l'accès à ce contenu via les ports associés dans le mappage temporaire mis en place. Une liaison HTTP est ainsi établie entre le module de restitution MP1 du terminal T1 et le serveur de contenu DMS1 pour la transmission du contenu C1 vers le terminal T1 à travers la passerelle GW1: de manière connue, du fait du mappage en place, lors de la réception d'un paquet comprenant en en-tête une adresse IP et un port mappé, le module de traduction d'adresse ACC1 de la passerelle GW1 remplace cette adresse et ce port mappé par l'adresse et le port défini dans le mappage en place, avant de transmettre le paquet ainsi modifié à l'entité destinataire.

L'invention permet à un utilisateur d'un terminal disposant d'un accès au réseau Internet, par exemple d'un téléphone mobile ou terminal de type "NetBook" de consulter à distance les contenus hébergés dans son réseau domestique et de restituer ces contenus sur son terminal.

## Revendications

1. Procédé pour fournir à un équipement (T1) un accès à un contenu (C1) référencé par un serveur de contenus (DMS1) d'un réseau local (RS1),
le procédé comprenant une étape de fourniture audit équipement, par un module mandataire (DMSP) apte à recevoir dudit équipement des requêtes destinées audit serveur de contenus, d'une adresse temporaire dudit contenu pointant vers une entité (AM) du réseau,
ladite entité étant conçue pour commander, suite à une réception d'une requête d'accès audit contenu, une mise en place pour ledit accès, par une passerelle d'accès audit réseau, d'un mappage entre un premier port dit externe de la passerelle d'accès et un deuxième port dit interne du serveur de contenus.

2. Procédé selon la revendication 1, dans lequel ledit mappage est temporaire et destiné à être supprimé après la fin dudit accès.

3. Procédé selon la revendication 1, dans lequel une durée d'inactivité est définie pour ledit mappage, ledit mappage étant destiné à être supprimé si aucun paquet n'est reçu via ledit port externe pendant une telle durée.

4. Procédé selon la revendication 1, comprenant une étape de génération et d'envoi audit équipement d'un code d'accès à usage unique, réservé pour ledit accès audit contenu, destiné à être fourni avec ladite requête d'accès, ledit mappage n'étant mis en place que si le code d'accès fourni avec ladite requête est valide.

5. Procédé selon la revendication 4, dans lequel le code d'accès fourni est invalidé après réception de la requête d'accès.

6. Procédé selon la revendication 1, comprenant une étape d'émission (206) par ladite entité, en réponse à ladite requête d'accès, d'une requête de redirection de ladite requête d'accès vers ledit port externe de la passerelle d'accès.

7. Procédé selon la revendication 1, dans lequel l'adresse temporaire fournie identifie ladite passerelle d'accès et un port de communication de ladite passerelle d'accès sur lequel la requête d'accès est destinée à être envoyée.

8. Module mandataire (DMSP) d'un réseau (RS1) local pour permettre à un équipement (T1) d'accéder à un contenu (C1) référencé par un serveur de contenus (DMS1) dudit réseau, le module mandataire comprenant des moyens pour recevoir dudit équipement des requêtes destinées audit serveur de contenus,
ledit module mandataire comprenant des moyens pour fournir audit équipement une adresse temporaire pointant vers une entité (AM) dudit réseau conçue pour commander, suite à la réception d'une requête d'accès audit contenu, une mise en place pour ledit accès, par une passerelle d'accès (GW1) audit réseau, d'un mappage entre un premier port dit externe de la passerelle d'accès et un deuxième port dit interne du serveur de contenus.

9. Module mandataire selon la revendication 8, comprenant des moyens de génération et d'envoi audit équipement d'un code d'accès à usage unique, réservé pour ledit accès audit contenu, destiné à être fourni avec ladite requête d'accès, ledit mappage n'étant mis en place que si le code d'accès fourni avec ladite requête d'accès est valide.

10. Module de gestion d'accès (AM) d'un réseau pour fournir à un équipement (T1) un accès à un contenu (C1) référencé par un serveur de contenus (DMS1) dudit réseau (RS1), ledit module étant apte à commander, suite à une réception d'une requête d'accès comprenant une adresse temporaire générée pour ledit contenu, une mise en place pour ledit accès, par une passerelle d'accès (GW1) audit réseau, d'un mappage entre un premier port dit externe de la passerelle d'accès et un deuxième port dit interne du serveur de contenus.

11. Module de gestion d'accès (AM) selon la revendication 11, comprenant des moyens d'émission (206), en réponse à ladite requête d'accès, d'une requête de redirection de ladite requête d'accès vers ledit port externe de la passerelle d'accès.

12. Module de configuration (IGD1) d'une passerelle d'accès (GW1) à un réseau (RS1), le module de configuration comprenant des moyens pour recevoir et traiter une commande de mise en place, en vue d'un accès à un contenu (C1) référencé par un serveur de contenus (DMS1) dudit réseau (RS1), d'un mappage entre un premier port dit externe de la passerelle d'accès et un deuxième port dit interne du serveur de contenus, ledit module de configuration comprenant des moyens pour supprimer ledit mappage si aucun paquet n'est reçu via ledit port externe pendant une durée d'inactivité définie dans ladite commande.

13. Système de communication comportant:
- un équipement (T1) d'un utilisateur (U1);
- un serveur de contenus (DMS1), connecté à un réseau local (RS1);
- une passerelle domestique (GW1), servant de passerelle d'accès au réseau local (RS1) comportant un module mandataire (DMSP) selon la revendication 8 permettant à l'équipement (T1 d'accéder à un contenu (C1) référencé par le serveur de contenus (DMS1) du réseau .

14. Terminal comportant un module d'accès client (RAC) permettant à un utilisateur U1 de sélectionner un contenu (C1) référencé par un serveur de contenus (DMS1) d'un réseau local (RS1) et de piloter la restitution du contenu (C1), le module d'accès client (RAC) est apte à communiquer avec un module mandataire selon la revendication 8 mis en oeuvre dans une passerelle domestique GW1, servant de passerelle d'accès au réseau local RS1.

## Patentansprüche

1. Verfahren zum Liefern eines Zugangs zu einem von einem Inhaltsserver (DMS1) eines lokalen Netzes (RS1) referenzierten Inhalt (C1) an ein Gerät (T1),
wobei das Verfahren einen Schritt des Lieferns an das Gerät durch ein Proxy-Modul (DMSP), das von dem Gerät an den Inhaltsserver gerichtete Anforderungen empfangen kann, einer zu einer Entität (AM) des Netzes weisenden temporären Adresse des Inhalts enthält,
wobei die Entität konzipiert ist, nach einem Empfang einer Zugangsanforderung zum Inhalt eine Bereitstellung für den Zugang, über ein Zugangs-Gateway zum Netz, eines Mappings zwischen einem so genannten externen ersten Port des Zugangs-Gateways und einem so genannten externen zweiten Port des Inhaltsservers zu befehlen.

2. Verfahren nach Anspruch 1, wobei das Mapping temporär und dazu bestimmt ist, nach dem Ende des Zugangs entfernt zu werden.

3. Verfahren nach Anspruch 1, wobei eine Inaktivitätsdauer für das Mapping definiert wird, wobei das Mapping dazu bestimmt ist, entfernt zu werden, wenn während einer solchen Dauer kein Paket über den externen Port empfangen wird.

4. Verfahren nach Anspruch 1, das einen Schritt des Erzeugens und Sendens an das Gerät eines für den Zugang zum Inhalt reservierten Einmal-Zugangscodes enthält, der dazu bestimmt ist, mit der Zugangsanforderung geliefert zu werden, wobei das Mapping nur bereitgestellt wird, wenn der mit der Anforderung gelieferte Zugangscode gültig ist.

5. Verfahren nach Anspruch 4, wobei der gelieferte Zugangscode nach Empfang der Zugangsanforderung ungültig gemacht wird.

6. Verfahren nach Anspruch 1, das einen Schritt des Sendens (206), durch die Entität, als Antwort auf die Zugangsanforderung, einer Weiterleitungsanforderung der Zugangsanforderung zum externen Port des Zugangs-Gateways enthält.

7. Verfahren nach Anspruch 1, wobei die gelieferte temporäre Adresse das Zugangs-Gateway und einen Kommunikationsport des Zugangs-Gateways identifiziert, an den die Zugangsanforderung gesendet werden soll.

8. Proxy-Modul (DMSP) eines lokalen Netzes (RS1), um es einem Gerät (T1) zu erlauben, auf einen von einem Inhaltsserver (DMS1) des Netzes referenzierten Inhalt (C1) zuzugreifen, wobei das Proxy-Modul Einrichtungen enthält, um für den Inhaltsserver bestimmte Anforderungen vom Gerät zu empfangen,
wobei das Proxy-Modul Einrichtungen enthält, um an das Gerät eine zu einer Entität (AM) des Netzes weisende temporäre Adresse zu liefern, die konzipiert ist, um nach dem Empfang einer Zugangsanforderung zum Inhalt eine Bereitstellung für den Zugang über ein Zugangs-Gateway (GW1) zum Netz eines Mappings zwischen einem so genannten externen ersten Port des Zugangs-Gateways und einem so genannten internen zweiten Port des Inhaltsservers zu befehlen.

9. Proxy-Modul nach Anspruch 8, das Einrichtungen zum Erzeugen und Senden an das Gerät eines für den Zugang zum Inhalt reservierten Einmal-Zugangscodes enthält, der dazu bestimmt ist, mit der Zugangsanforderung geliefert zu werden, wobei das Mapping nur bereitgestellt wird, wenn der mit der Zugangsanforderung gelieferte Zugangscode gültig ist.

10. Zugangsverwaltungsmodul (AM) eines Netzes zum Liefern eines Zugangs zu einem von einem Inhaltsserver (DMS1) des Netzes (RS1) referenzierten Inhalt (C1) an ein Gerät (T1), wobei das Modul nach einem Empfang einer eine für den Inhalt generierte temporäre Adresse enthaltenden Zugangsanforderung eine Bereitstellung für den Zugang, über ein Zugangs-Gateway (GW1) zum Netz, eines Mappings zwischen einem so genannten externen ersten Port des Zugangs-Gateways und einem so genannten internen zweiten Port des Inhaltsservers befehlen kann.

11. Zugangsverwaltungsmodul (AM) nach Anspruch 11, das Einrichtungen (206) zum Senden, als Antwort auf die Zugangsanforderung, einer Weiterleitungsanforderung der Zugangsanforderung zum externen Port des Zugangs-Gateways enthält.

12. Konfigurationsmodul (IGD1) eines Zugangs-Gateways (GW1) zu einem Netz (RS1), wobei das Konfigurationsmodul Einrichtungen enthält, um einen Bereitstellungsbefehl, für einen Zugang zu einem von einem Inhaltsserver (DMS1) des Netzes (RS1) referenzierten Inhalt (C1), eines Mappings zwischen einem so genannten externen ersten Port des Zugangs-Gateways und einem so genannten internen zweiten Port des Inhaltsservers zu empfangen und zu verarbeiten, wobei das Konfigurationsmodul Einrichtungen enthält, um das Mapping zu entfernen, wenn kein Paket über den externen Port während einer im Befehl definierten Inaktivitätsdauer empfangen wird.

13. Kommunikationssystem, umfassend:
- ein Gerät (T1) eines Benutzers (U1);
- einen mit einem lokalen Netz (RS1) verbundenen Inhaltsserver (DMS1);
- ein Heim-Gateway (GW1), das als Zugangs-Gateway zum lokalen Netz (RS1) dient, das ein Proxy-Modul (DMSP) nach Anspruch 8 umfasst, das es dem Gerät (T1) erlaubt, auf einen von dem Inhaltsserver (DMS1) des Netzes referenzierten Inhalt (C1) zuzugreifen.

14. Terminal, das ein Client-Zugangsmodul (RAC) umfasst, das es einem Benutzer (U1) erlaubt, einen von einem Inhaltsserver (DMS1) eines lokalen Netzes (RS1) referenzierten Inhalt (C1) auszuwählen und die Wiedergabe des Inhalts (C1) zu steuern, wobei das Client-Zugangsmodul (RAC) mit einem Proxy-Modul nach Anspruch 8 kommunizieren kann, das in einem Heim-Gateway (GW1) eingesetzt wird, das als Zugangs-Gateway zum lokalen Netz (RS1) dient.

## Claims

1. Method for providing an equipment (T1) with an access to a content (C1) referenced by a content server (DMS1) of a local area network (RS1),
the method comprising a step of providing said equipment, by means of a proxy module (DMSP) that is capable of receiving requests from said equipment that are intended for said content server, with a temporary address for said content pointing to an entity (AM) of the network,
said entity being designed to control, following a reception of a request for access to said content, a set-up, for said access, by means of an access gateway to said network, of a mapping between a first "external" port of the access gateway and a second "internal" port of the content server.

2. Method according to Claim 1, in which said mapping is temporary and intended to be removed after the end of said access.

3. Method according to Claim 1, in which a period of inactivity is defined for said mapping, said mapping being intended to be removed if no package is received via said external port during such a period.

4. Method according to Claim 1, comprising a step of generation and sending of a single-use access code to said equipment, which access code is reserved for said access to said content and intended to be provided along with said access request, said mapping being set up only if the access code provided along with said request is valid.

5. Method according to Claim 4, in which the access code provided is invalidated after reception of the access request.

6. Method according to Claim 1, comprising a step of transmission (206), by said entity, in response to said access request, of a request for redirection of said access request to said external port of the access gateway.

7. Method according to Claim 1, in which the temporary address provided identifies said access gateway and a communication port of said access gateway on which the access request is intended to be sent.

8. Proxy module (DMSP) of a local area network (RS1) for allowing a equipment (T1) to access a content (C1) referenced by a content server (DMS1) of said network, the proxy module comprising means for receiving requests from said equipment that are intended for said content server,
said proxy module comprising means for providing said equipment with a temporary address pointing to an entity (AM) of said network, which entity is designed to control, following a reception of a request for access to said content, set-up, for said access, by means of an access gateway (GW1) to said network, of mapping between a first "external" port of the access gateway and a second "internal" port of the content server.

9. Proxy module according to Claim 8, comprising means for generating and sending a single-use access code to said equipment, which access code is reserved for said access to said content and intended to be provided along with said access request, said mapping being set up only if the access code provided along with said access request is valid.

10. Access management module (AM) of a network for providing a equipment (T1) with an access to a content (C1) referenced by a content server (DMS1) of said network (RS1), said module being capable of controlling, following a reception of an access request comprising a temporary address generated for said content, set-up, for said access, by means of an access gateway (GW1) to said network, of a mapping between a first "external" port of the access gateway and a second "internal" port of the content server.

11. Access management module (AM) according to Claim 11, comprising means for transmitting (206), in response to said access request, a request for redirection of said access request to said external port of the access gateway.

12. Configuration module (IGD1) for an access gateway (GW1) to a network (RS1), the configuration module comprising means for receiving and processing a command for set-up, for the purpose of an access to a content (C1) referenced by a content server (DMS1) of said network (RS1), of a mapping between a first "external" port of the access gateway and a second "internal" port of the content server, said configuration module comprising means for removing said mapping if no packet is received via said external port during a period of inactivity that is defined in said command.

13. Communication system having:
- a equipment (T1) of a user (U1);
- a content server (DMS1), which is connected to a local area network (RS1);
- a home gateway (GW1), serving as an access gateway to the local area network (RS1), having a proxy module (DMSP) according to Claim 8 allowing the equipment (T1) to access a content (C1) referenced by the content server (DMS1) of the network.

14. Terminal having a customer access module (RAC) allowing a user (Ul) to select a content (C1) referenced by a content server (DMS1) of a local area network (RS1) and to control the restoration of the content (C1), the customer access module (RAC) being capable of communicating with a proxy module according to Claim 8 that is implemented in a home gateway (GW1), serving as an access gateway to the local area network (RS1).
